# EUROPÄISCHE PATENTSCHRIFT

(11) **EP 0 793 051 B1**
(45) Veröffentlichungstag und Bekanntmachung des Hinweises auf die Patenterteilung: **18.04.2001**
(21) Anmeldenummer: 97102852.7
(22) Anmeldetag: 21.02.1997
(51) Int. Cl.: F16L 58/10

(54) **Korrosionsschutzsystem für Schweissstellen an Stahlrohrleitungen**
Corrosion inhibiting system for welding zones of steel pipelines
Système résistant à la corrosion dans la zône de soudage de tuyauteries en acier

(30) Priorität: 28.02.1996 DE 29603664 U
(43) Veröffentlichungstag der Anmeldung: 03.09.1997
(73) Patentinhaber: DENSO-Holding GmbH & Co., 51371 Leverkusen (DE)
(72) Erfinder:
(74) Vertreter: Langmaack, Jürgen, Dipl.-Ing.

(56) Entgegenhaltungen:
- DATABASE WPI Section Ch, Week 9601 Derwent Publications Ltd., London, GB; Class A25, AN 96-003855 XP002031599 & JP 07 280 168 A (DAINIPPON INK & CHEM INC) , 27.Oktober 1995

## Beschreibung

Für die Korrosionsschutz-Ummantelung von Schweißstellen an werkseitig mit Polyethylen oder Polypropylen ummantelten Rohrleitungen für Erdbodendurchpressungen, insbesondere bei Vortriebstrecken durch schweren, steinigen Erdboden, ist es bekannt, GFK-Systeme, d.h Reaktionsharz-Laminate mit Einlagen aus Glasfaser-Halbzeugen wie Fasermatten, Roving-Geweben und Faservliesen auf Basis von ungesättigten Polyesterharzen mit Zusatz von monomerem Styrol oder auf Basis von zweikomponentigen Epoxidharz-Formulierungen aufzubringen.

Derartige Verbundsysteme sind jedoch zeitraubend in der Aufbringung, dadurch entsprechend kostspielig und zudem mit wesentlichen technischen Nachteilen behaftet. Die Stahloberfläche muß nämlich zuvor sorgfältig getrocknet und durch Abrasionsstrahlung gereinigt und aufgerauht werden, da die genannten Harztypen keine echte Adhäsion zur Stahloberfläche entwickeln, sondern sich nur durch mechanische Mikroverkrallung darauf verankern können. Infolgedessen kann bei durchgehender Verletzung der Harzschicht flächige Unterrostung oder auf einer kathodisch geschützten Rohrleitung kathodische Unterwanderung eintreten, was einen hohen Schutzstromverlust zur Folge hat.

Ein weiterer Nachteil der genannten Harztypen ist ihre Empfindlichkeit gegenüber Feuchtezutritt während der Applikation. Dadurch ist aufwendige Einhausung der Arbeitszone mit einem klimatisierbaren Zelt erforderlich, um Applikationsfehler durch Unterschreitung des notwendigen Taupunktabstandes zu vermeiden. Etwaige Störungen durch Feuchtezutritt können zudem nicht sofort erkannt werden. Sie machen sich erst nach abgeschlossener Härtung der Harze in Form von Haftfestigkeitsverlust bemerkbar und verursachen somit aufwendige Nachbesserungsarbeiten.

Außerdem müssen die genannten Harztypen auf eine genau dosierte Härtungsgeschwindigkeit eingestellt sein, da bei zu schneller Härtung Rißbildung durch Schrumpfspannungen droht.

Schließlich sind die genannten Harztypen auch arbeitshygienisch problematisch. Ihre Verarbeitung setzt regelmäßige Personenbelehrung und zum Teil sehr unbequeme Arbeitsschutzmaßnahmen voraus.

Neben den genannten GFK-Systemen ist als Korrosionsschutz-Ummantelung für Erddurchpressungen eine zweikomponentige Spachtelmasse auf Basis von Methylmethacrylat ohne Glasfaser-Armierung bekannt. Auch diese Masse erreicht auf der Stahloberfläche nur mechanische Verkrallung ohne echte Adhäsion. Ein weiterer Nachteil ist ihre schwierige Verarbeitbarkeit infolge zu schneller Gelierung. Das hat zur Folge, daß eingeschlossene Luftblasen nicht mehr entweichen können und elektrisch undichte Stellen erzeugen. Um elektrische Dichtheit zu erreichen, muß die Masse in mehreren Schichten übereinander mit jeweils erheblicher Zwischenhärtungszeit aufgespachtelt werden. Außerdem darf die peroxidische Härterkomponente nur in sehr geringer Dosierung zugesetzt werden, was eine genügend homogene Verteilung sehr erschwert. Die dadurch oftmals unvermeidbare Ungleichmäßigkeit der Härtungsgeschwindigkeit verursacht neben weichbleibenden Stellen einerseits überhärtete Zonen andererseits, die durch zu hohe Schrumpfspannungen nicht selten Sprödrisse aufweisen.

Der Erfindung liegt die Aufgabe zugrunde, ein Korrosionsschutz-System für die Ummantelung von Schweißstellen an Stahlrohrleitungen für Erdbodendurchpressungen bereitzustellen, welches mit den genannten Nachteilen der hierfür bisher bekannten Werkstoffsysteme nicht behaftet ist.

Diese Aufgabe wird gemäß der Erfindung gelöst durch eine Korrosionsschutz-Ummantelung in Form wenigstens einer auf der zu schützenden Oberfläche haftenden Deckschicht, die einen auf die metallische Oberfläche aufgebrachten einkomponentigen Reaktionsprimer auf Basis von Polyisocyanat und eine darauf aufgebrachte zumindest streichfähige Zweikomponenten-Masse auf der Basis von Polyurethan aufweist.

Die erfindungsgemäße Korrosionsschutz-Ummantelung besitzt gegenüber den für Erdbodendurchpressungen verwendeten Werkstoffsystemen eine Reihe wesentlicher Vorteile. Der zunächst auf die Stahloberfläche aufgebrachte Reaktionsprimer ist einkomponentig und härtet mit Luftfeuchtigkeit oder an der Stahloberfläche adsorbierter Feuchte als Reaktionspartner aus. Daher kann die Umgebungsfeuchte beliebig hoch und die Stahloberfläche sogar naßkalt sein. Eine besondere Vorbereitung der Stahloberfläche ist nicht erforderlich, sie darf sogar leicht angerostet sein, während im Gegensatz hierzu bei dem Einsatz der obengenannten Reaktionsharzsysteme eine sorgfältige Trocknung und Entrostung der Stahloberfläche erforderlich ist. Der Reaktionsprimer entwickelt eine echte, sehr feste Adhäsion zur Stahloberfläche, so daß diese nicht zuvor mittels Abrasionsstrahlung aufgerauht werden muß. Auch bei Schlag- oder Kratzeinwirkung platzt der Reaktionsprimer nicht spröde ab. Damit wird jegliche Unterrostung und jegliche kathodische Unterwanderung verhindert. Bei einer mechanischen Verletzung der Deckschicht wird der Schutzstrombedarf durch den Primer auf ein Minimum herabgesetzt.

Ein weiterer Vorteil besteht darin, daß der Reaktionsprimer eine extrem feste Haftbrücke zwischen der Stahloberfläche und der hierauf aufgebrachten Polyurethan-Masse bildet, da zwischen beiden eine echte chemische Reaktionsverbindung eintritt. Der Reaktionsprimer kann aufgrund seiner geringen Viskosität mit Handrolle, Pinsel oder Spritzpistole einfach und schnell aufgebracht werden.

Die Polyurethan-Masse kann in ihrer Viskosität und ihrer Härtungsgeschwindigkeit in weiten Grenzen eingestellt werden, wobei gegebenenfalls noch Beschleuniger zur Anpassung an die jeweils herrschenden Temperaturbedingungen zugegeben werden können. Die Polyurethan-Masse wird zweckmäßigerweise in ihrer Viskosität so eingestellt, daß sie mit Hilfe eines Spachtels aufgetragen werden kann und so eine glatte Deckschicht entsteht. Die Polyurethan-Masse ist rasch selbsthärtend. Da sie nicht entzündlich ist, kann sie aber auch unmittelbar nach erfolgter Aufspachtelung mit einer offenen Gasflamme erhitzt und damit die Durchhärtung bis in den Minutenbereich beschleunigt werden, ohne daß Gefahr der Bildung von Schrumpfrissen besteht. Die ausgehärtete Masse ist glatt und zähhart und daher besonders widerstandsfähig gegen Schlag-, Kratz- und Abrasionsbeanspruchung. Sie widersteht Rohrrammungen und Drillbohrungen durch schwersten, steinigen Erdboden.

Die erfindungsgemäße Korrosionsschutz-Ummantelung bietet den Vorteil, daß die aufzutragende Deckschicht in ihrer Dicke genau auf die Dicke der an beiden Seiten der Schweißstelle angrenzenden Werksumhüllung des Rohres eingestellt werden kann, ohne daß die Werksumhüllung überlappt werden muß, wie es bei GFK-Systemen unvermeidlich ist. Es entsteht also keine Durchmesservergrößerung gegenüber der vorhandenen Werksummantelung und somit keine zusätzliche Zwängung bei der Erdbodendurchpressung. Diese Applikationsweise hat zudem den Vorteil, daß die seitlichen Kanten der werkseitigen Rohrummantelung unverändert bleiben können, also nicht aufgerauht oder abgeflacht werden müssen.

Ein weiterer Vorteil besteht darin, daß die Auftragung der Spachtelmasse mit voller Dicke in einem Arbeitsgang erfolgen kann und dabei sofort vollständige elektrische Dichtheit erreicht wird, weil Polyurethan-Formulierungen eingeschlossene Luftblasen leichter abstoßen und heraustreten lassen als die obengenannten, sehr unpolaren Polyester- und Methylmethacrylatharze.

Die deutlich größere Polarität von Polyurethan-Formulierungen in Kombination mit einem ausreichenden Zusatz an Zeolith-Pulver bewirkt auch eine bessere Toleranz gegenüber Störungen durch Feuchtezutritt bei der Applikation, als es bei den genannten bisherigen Werkstoffsystemen für Erdbodendurchpressungen der Fall ist. Infolgedessen ist bei der Applikation des erfindungsgemäßen Ummantelungssystems weder aufwendige Einhausung noch Klimatisierung erforderlich. Es genügt ein Schirm gegen direkten Regen.

Der Reaktionsprimer ist erfindungsgemäß einkomponentig aufgebaut und enthält zweckmäßigerweise im wesentlichen ein aromatisches Polyisocyanat-Prepolymer auf der Basis von Diphenylmethandiisocyanat mit einem NCO-Gehalt zwischen 8% und 18%. Zweckmäßig ist es ferner, wenn der Primer zusätzlich wenigstens ein praktisch wasserfreies Lösemittel enthält. Ein Wassergehalt von max. 0,05% ist noch tolerabel. Als Lösemittel eignen sich hier beispielsweise Alkylester, Alkoxyester, Aromaten, aromatische Benzine oder entsprechende Lösemittelgemische.

Zweckmäßig ist es ferner, wenn der Primer Lackpigmente und/oder mineralische Füllstoffe und/oder Lackadditive enthält.

Die als Deckschicht verwendete Polyurethan-Masse ist zweckmäßigerweise zweikomponentig aufgebaut. Die Polyol-Komponente besteht zweckmäßigerweise aus einem verzweigten Polyesterpolyol, dem ein verzweigtes Polyetherpolyol zugesetzt sein kann.

Erfindungsgemäß wird die Gegenkomponente in der Polyurethan-Masse im wesentlichen durch ein aromatisches Polyisocyanat-Prepolymer auf Basis von Diphenylmethandiisocyanat gebildet. Es können aber auch Polyisocyanat-Prepolymere auf TDI-Basis verwendet werden.

In vorteilhafter Ausgestaltung der Erfindung ist vorgesehen, daß wenigstens eine der beiden Komponenten der Polyurethan-Masse feinteilige Kurzfasern aus einem Kunststoff mit hydrophoben Eigenschaften enthält. Bevorzugt sind hierbei Polyolefinfasern, insbesondere Polyethylen oder Polypropylen. Durch die hydrophoben Eigenschaften dieser zur Verdickung dienenden Fasern ist gewährleistet, daß sie nahezu wasserfrei sind. Damit ist auch die Möglichkeit gegeben, in beide Komponenten der Polyurethan-Masse, also auch in das Polyisocyanat, gleiche Faseranteile einzubringen. Die Reaktivität des Polyisocyanats wird hierbei nicht beeinträchtigt. Der Vorteil besteht darin, daß ein großes Faservolumen in gleichmäßiger Verteilung in die Gesamtmischung eingebracht werden kann, was auf dem Wege über nur eine der beiden Komponenten nicht möglich wäre, da diese Komponente dadurch zu steif würde.

Die Zugabe derartiger Kunststoffasern hat zum einen den Vorteil, daß über die Fasermenge die Viskosität und damit die Verarbeitbarkeit eingestellt werden kann. Die Masse kann beispielsweise nichttropfend eingestellt werden, so daß sich hier eine gut spachtelbare Masse ergibt. Ein weiterer Vorteil besteht darin, daß beide Komponenten werkseitig mit Fasern versetzt und in fertigen Gebinden ausgeliefert werden können, und daß infolge des geringen Gewichtes der Fasern auch bei längerer Lagerzeit keine Bodensatzbildung eintritt.

Zu einer erfindungsgemäßen bevorzugten Ausgesteltung weist der Reaktionsprimer eine Zusammensetzung auf von

| | |
|---|---|
| 20 bis 50 Gewichts-% | aromatisches Polyisocyanat-Prepolymer auf Basis von Diphenylmethan-diisocyanat mit NCO-Gehalt von 8% bis 18% |
| 0 bis 40 Gewichts-% | Lackpigmente und/oder mineralische Füllstoffe |
| 0 bis 7 Gewichts-% | Lackadditive |
| 0 bis 80 Gewichts-% | Lösemittel mit 0,05% Wassergehalt (beispielsweise Alkylester, Alkoxyester, Aromaten, aromatische Benzine oder entsprechende Lösemittelgemische) |

Bevorzugt weist die Polyurethan-Masse verarbeitungsfertig vermischt eine Zusammensetzung auf von

| | |
|---|---|
| 10 bis 30 Gewichts-% | verzweigtes Polyesterpolyol mit Hydroxylgehalt von 3% bis 8% und Viskositäten von 300 bis 16000 mPas |
| 10 bis 30 Gewichts-% | verzweigtes Polyetherpolyol mit Hydroxylgehalt von 2% bis 25% und Viskositäten von 50 bis 4000 mPas |
| 30 bis 50 Gewichts-% | aromatisches Polyisocyanat-Prepolymer auf Basis von Diphenylmethan-diisocyanat mit NCO-Gehalt von 29% bis 33% |
| 0 bis 10 Gewichts-% | Zeolith-Pulver |
| 0 bis 4 Gewichts-% | Lackadditive |
| 5 bis 15 Gewichts-% | Polyethylenfaser |

Anhand einer schematischen Zeichnung wird als Anwendungsfall eine Nachisolierung des Schweißstellenbereiches einer Rohrleitung mit werkseitiger Korrosionsschutz-Ummantelung beschrieben.

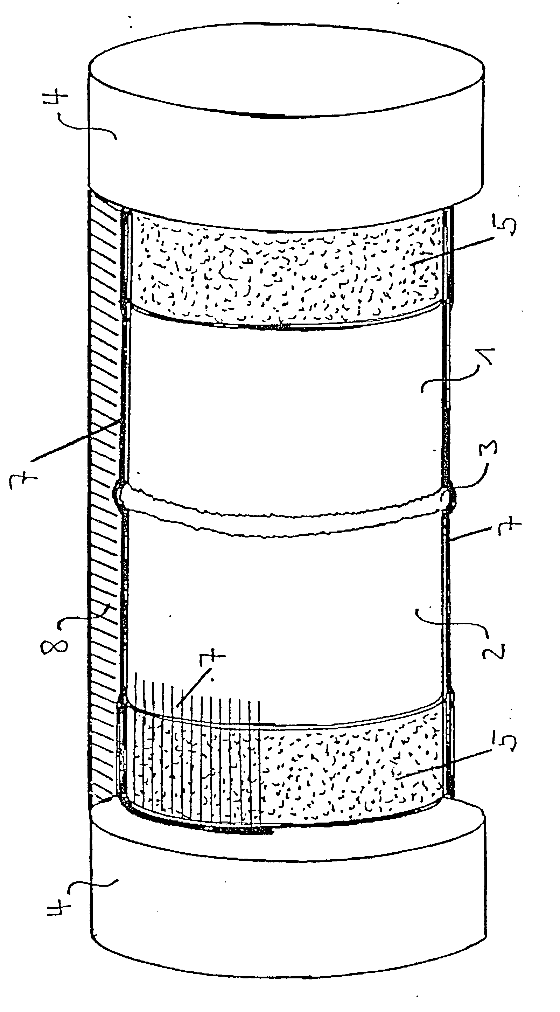

Die Zeichnung zeigt in einem Teillängsschnitt zwei Rohre 1, 2, die mit ihren Stirnenden zu einem Rohrstrang miteinander verschweißt sind. Die Schweißstelle ist durch die Schweißraupe 3 gekennzeichnet. Beide Rohre 1, 2 sind jeweils werkseitig mit einer Ummantelung 4 aus einem thermoplastischen Kunststoff, beispielsweise Polypropylen, sowie auf der Stahloberfläche und unter der Ummantelung 4 mit einer Korrosionsschutz-Grundierung 5, beispielsweise auf Epoxid-Basis, versehen. Wegen der notwendigen Schweißarbeit bleibt die Stahloberfläche 6 an den Rohrenden bereits werkseitig freiliegend.

Nach dem Verschweißen wird die freiliegende Stahloberfläche 6 und die beiderseits angrenzende werkseitige Korrosionsschutz-Grundierung 5 bis gegen die Kante der Werksummantelung 4 zunächst mit dem erfindungsgemäßen Reaktionsprimer 7 beschichtet. Je nach Anwendungsfall ist auch eine mehrfache Auftragung des Reaktionsprimers 7 möglich. Die mit dem Primer 7 überschichtete Zone braucht zuvor nicht vorgetrocknet oder gestrahlt zu werden, sofern letzteres nicht aus metallurgischen Gründen erforderlich ist. Da der Reaktionsprimer 7 sowohl mit der freien Stahloberfläche 6 als auch mit der werkseitigen Korrosionsschutz-Grundierung 5 eine sehr feste Adhäsionsverbindung eingeht, ergibt sich eine durchgehend dichte, festhaftende Korrosionsschutz-Grundschicht, die zugleich eine extrem feste Haftbrücke für die aufzubringende Polyurethan-Masse bildet.

Anschließend wird auf die Reaktionsprimerschicht 7 die Polyurethan-Masse in einer Schicht 8 aufgespachtelt. Die Dicke der Polyurethan-Masseschicht 8 ist hierbei zweckmäßigerweise so bemessen, daß die Schicht 8 mit der an beiden Seiten angrenzenden Polyethylen-Ummantelung 4 bündig liegt. Ohne zusätzliche Erwärmung härtet die Polyurethanschicht 8 je nach Temperaturlage in einer Zeit von etwa 2 bis 6 Stunden aus. Durch Erwärmen mit einer Propangasflamme läßt sich die Durchhärtungsreaktion der Polyurethan-Masseschicht 8 bis in den Minutenbereich beschleunigen.

Während bei großen Rohrdurchmessern die Polyurethan-Masse mit Hilfe eines Spachtels oder rakelartigen Gerätes aufgebracht werden kann, das sich zur Einstellung der Schichtdicke jeweils auf der Außenfläche der beiden angrenzenden Werksummantelungen 4 abstützt und so eine gleichmäßige glatte Oberfläche erzielt werden kann, besteht bei kleineren Rohrdurchmessern die Möglichkeit, die Polyurethan-Masse nach dem Auftragen mittels Handspachtel mit einem dünnen Vlies aus Polypopylenfasern abzudecken und dadurch zu glätten. In beiden Fällen können Fehlstellen beim Auftragen der Polyurethan-Masse während der Reaktionszeit oder nach erfolgter Aushärtung durch entsprechendes örtliches Überspachteln leicht und schnell behoben werden.

## Patentansprüche

1. Korrosionsschutz-System für die Ummantelung von Schweißstellen an Stahlrohrleitungen, insbesondere an Stahlrohrleitungen für Erdbodendurchpressungen, dadurch gekennzeichnet, daß das Korrosionsschutz-System wenigstens eine auf der Stahloberfläche haftende Grundschicht aus einem Reaktionsprimer auf Basis von Polyisocyanat-Prepolymer und wenigstens eine darauf aufgebrachte Deckschicht aus einer zweikomponentigen Reaktionsharzmasse auf Basis von Polyurethan aufweist.

2. Korrosionsschutz-System nach Anspruch 1, dadurch gekennzeichnet, daß der Reaktionsprimer einkomponentig aufgebracht ist.

3. Korrosionsschutz-System nach Anspruch 1 und 2, dadurch gekennzeichnet, daß der Reaktionsprimer mit Luftfeuchtigkeit und/oder an der Stahloberfläche adsorbierter Feuchtigkeit als Reaktionspartner härtet.

4. Korrosionsschutz-System nach einem der Ansprüche 1 bis 3, dadurch gekennzeichnet, daß der Reaktionsprimer im wesentlichen ein Polyisocyanat-Prepolymer enthält.

5. Korrosionsschutz-System nach einem der Ansprüche 1 bis 4, dadurch gekennzeichnet, daß der Reaktionsprimer im wesentlichen ein aromatisches Polyisocyanat-Prepolymer auf Basis von Diphenylmethan-diisocyanat mit einem NCO-Gehalt von mindestens 8% enthält.

6. Korrosionsschutz-System nach einem der Ansprüche 1 bis 5, dadurch gekennzeichnet, daß der Reaktionsprimer eine Zusammensetzung aufweist von
| | |
|---|---|
| 20 bis 50 Gewichts-% | aromatisches Polyisocyanat-Prepolymer auf Basis von Diphenylmethan-diisocyanat mit NCO-Gehalt von 8% bis 18% |
| 0 bis 40 Gewichis-% | Lackpigmente und/oder mineralische Füllstoffe |
| 0 bis 7 Gewichts-% | Lackadditive |
| 0 bis 80 Gewichts-% | Lösemittel mit 0,05% Wassergehalt (beispielsweise Alkylester, Alkoxyester, Aromaten, aromatische Benzine oder entsprechende Lösemittelgemische) |

7. Korrosionsschutz-System nach einem der Ansprüche 1 bis 6, dadurch gekennzeichnet, daß die zweikomponentige Polyurethan-Masse der Deckschicht als Polyol-Komponente ein verzweigtes Polyesterpolyol und/oder ein verzweigtes Polyetherpolyol enthält.

8. Korrosionsschutz-System nach einem der Ansprüche 1 bis 7, dadurch gekennzeichnet, daß die zweikomponentige Polyurethan-Masse der Deckschicht als Isocyanat-Komponente ein Polyisocyanat-Prepolymer enthält.

9. Korrosionsschutz-System nach einem der Ansprüche 1 bis 8, dadurch gekennzeichnet, daß sich die Polyurethan-Masse der Deckschicht mit der gehärteten Reaktionsprimer-Grundschicht vollflächig durch chemische Pfropfreaktion und zusätzliche Adhäsion verbindet.

10. Korrosionsschutz-System nach einem der Ansprüche 1 bis 9, dadurch gekennzeichnet, daß wenigstens eine der beiden Komponente der Polyurethan-Masse feinteilige Kurzfasern aus einem Kunststoff mit hydrophoben Eigenschaften enthält.

11. Korrosionsschutz-System nach einem der Ansprüche 1 bis 10, dadurch gekennzeichnet, daß wenigstens eine der beiden Komponente der Polyurethan-Masse feinteilige Kurzfasern aus Polyethylen enthält.

12. Korrosionsschutz-System nach einem der Ansprüche 1 bis 11 dadurch gekennzeichnet, daß die Polyurethan-Masse zusätzlich einen hochwirksamen Beschleuniger auf Amin-Basis und/ oder auf der Basis einer organischen Zinn(IV)-Verbindung enthält.

13. Korrosionsschutz-System nach einem der Ansprüche 1 bis 12, dadurch gekennzeichnet, daß die Polyurethan-Masse der Deckschicht niveaubündig zur angrenzenden Werksummantelung (4) des Rohres (1, 2) geglättet ist.

14. Korrosionsschutz-System nach einem der Ansprüche 1 bis 13, dadurch gekennzeichnet, daß die Polyurethan-Masse der Deckschicht mit einem dünnen Faservlies aus Polyethylen oder Polypropylen umwickelt und auf diese Weise geglättet ist.

## Claims

1. An anti-corrosion system for sheathing welds on steel pipes, in particular on steel pipes for trenchless pipe-laying, characterised in that the anti-corrosion system comprises at least one base layer, consisting of a reaction primer based on polyisocyanate prepolymer, which adheres to the steel surface and at least one top coating applied thereto, consisting of a dual-component catalysed resin based on polyurethane.

2. An anti-corrosion system according to Claim 1, characterised in that the reaction primer is applied in single-component form.

3. An anti-corrosion system according to Claims 1 and 2, characterised in that the reaction primer cures with atmospheric moisture and/or moisture adsorbed on the steel surface as reactant

4. An anti-corrosion system according to one of Claims 1 to 3, characterised in that the reaction primer contains substantially a polyisocyanate prepolymer.

5. An anti-corrosion system according to one of Claims 1 to 4, characterised in that the reaction primer essentially contains an aromatic polyisocyanate prepolymer based on diphenylmethane diisocyanate having an isocyanate content of at least 8%.

6. An anti-corrosion system according to one of Claims 1 to 5, characterised in that the reaction primer has a composition of
| | |
|---|---|
| 20 to 50% by weight | aromatic polyisocyanate prepolymer based on diphenylmethanediisocyanate with an isocyanate content of 8% to 18% |
| 0 to 40% by weight | paint pigments and/or mineral fillers |
| 0 to 7% by weight | paint additives |
| 0 to 80% by weight | solvent having 0.05% water content (for example alkyl esters, alkoxy esters, aromatics, aromatic benzines or corresponding solvent mixtures). |

7. An anti-corrosion system according to one of Claims 1 to 6, characterised in that the dual-component polyurethane compound of the top coating contains a branched polyester polyol and/or a branched polyether polyol as the polyol component.

8. An anti-corrosion system according to one of Claims 1 to 7, characterised in that the dual-component polyurethane compound of the top coating contains a polyisocyanate prepolymer as the isocyanate component.

9. An anti-corrosion system according to one of Claims 1 to 8, characterised in that the polyurethane compound of the top coating joins with the cured reaction primer base layer over its entire surface by a chemical grafting reaction and additional adhesion.

10. An anti-corrosion system according to one of Claims 1 to 9, characterised in that at least one of the two components of the polyurethane compound contains finely divided short fibres of a plastics material having hydrophobic properties.

11. An anti-corrosion system according to one of Claims 1 to 10, characterised in that at least one of the two components of the polyurethane compound contains finely-divided short fibres of polyethylene.

12. An anti-corrosion system according to one of Claims 1 to 11, characterised in that the polyurethane compound additionally contains a highly effective accelerator based on amine and/or based on an organic tin (IV) compound.

13. An anti-corrosion system according to one of Claims 1 to 12, characterised in that the polyurethane compound of the top coating is smoothed flush with the adjoining factory sheathing (4) of the pipe (1, 2).

14. An anti-corrosion system according to one of Claims 1 to 13, characterised in that the polyurethane compound of the top coating is wound with a thin bonded fabric of polyethylene or polypropylene and in this manner is smoothed.

## Revendications

1. Système de protection contre la corrosion pour l'enrobage de soudures sur des conduites en acier, en particulier des conduites en acier enfoncées dans la terre, caractérisé en ce que le système de protection contre la corrosion présente au moins une couche d'apprêt adhérant à la surface de l'acier faite d'un primaire réactif à base de prépolymère de polyisocyanate et, déposée sur celle-ci, au moins une couche de finition faite d'une composition de résine réactive à deux composants à base de polyuréthane.

2. Système de protection contre la corrosion selon la revendication 1, caractérisé en ce que le primaire réactif est appliqué sous la forme d'un seul composant.

3. Système de protection contre la corrosion selon la revendication 1 et la revendication 2, caractérisé en ce que le primaire réactif durcit avec l'humidité de l'air et/ou l'humidité adsorbée sur la surface de l'acier en tant que partenaire réactionnel.

4. Système de protection contre la corrosion selon l'une des revendications 1 à 3, caractérisé en ce que le primaire réactif contient pour l'essentiel un prépolymère de polyisocyanate.

5. Système de protection contre la corrosion selon l'une des revendications 1 à 4, caractérisé en ce que le primaire réactif contient pour l'essentiel un prépolymère de polyisocyanate aromatique à base de diisocyanate de diphénylméthane avec une teneur en NCO d'au moins 8%.

6. Système de protection contre la corrosion selon l'une des revendications 1 à 5, caractérisé en ce que le primaire réactif présente une composition de
| | |
|---|---|
| 20 à 50% en poids | de prépolymère de polyisocyanate aromatique à base de diisocyanate de diphénylméthane avec une teneur en NCO de 8% à 18%, |
| 0 à 40% en poids | de pigments de laque et/ou matières de charge minérales, |
| 0 à 7% en poids | d'additifs pour laques, |
| 0 à 80% en poids | de solvants avec une teneur en eau de 0,05% (par exemple des esters alkyliques, des esters alcoxydes, des hydrocarbures aromatiques, des essences aromatiques ou des mélanges de solvants correspondants). |

7. Système de protection contre la corrosion selon l'une des revendications 1 à 6, caractérisé en ce que la composition de polyuréthane à deux composants de la couche de finition contient comme composant polyol un polyol de polyester ramifié et/ou un polyol de polyéther ramifié.

8. Système de protection contre la corrosion selon l'une des revendications 1 à 7, caractérisé en ce que la composition de polyuréthane à deux composants de la couche de finition contient comme composant isocyanate un prépolymère de polyisocyanate.

9. Système de protection contre la corrosion selon l'une des revendications 1 à 8, caractérisé en ce que la composition de polyuréthane de la couche de finition se lie sur la totalité de la surface avec la couche d'apprêt de primaire réactif durcie par une réaction de greffage chimique et par une adhésion supplémentaire.

10. Système de protection contre la corrosion selon l'une des revendications 1 à 9, caractérisé en ce qu'au moins un des deux composants de la composition de polyuréthane contient des fibres courtes finement divisées faites d'une matière plastique possédant des propriétés hydrophobes.

11. Système de protection contre la corrosion selon l'une des revendications 1 à 10, caractérisé en ce qu'au moins un des deux composants de la composition de polyuréthane contient des fibres courtes finement divisées en polyéthylène.

12. Système de protection contre la corrosion selon l'une des revendications 1 à 11, caractérisé en ce que la composition de polyuréthane contient en plus un accélérateur hautement efficace à base d'amine et/ou à base d'un composé organique d'étain (IV).

13. Système de protection contré la corrosion selon l'une des revendications 1 à 12, caractérisé en ce que la composition de polyuréthane de la couche de finition est lissée au même niveau que l'enrobage (4) d'origine adjacent au tuyau (1, 2).

14. Système de protection contre la corrosion selon l'une des revendications 1 à 13, caractérisé en ce que la composition de polyuréthane de la couche de finition est enveloppée d'un mince non-tissé en fibres de polyéthylène ou polypropylène et en ce qu'elle est lissée de cette façon.
